# EUROPEAN PATENT SPECIFICATION

(11) **EP 3 579 547 B1**
(45) Date of publication and mention of the grant of the patent: **26.06.2024**
(21) Application number: 17894904.6
(22) Date of filing: 07.11.2017
(51) Int. Cl.: H04N 23/60, H04N 23/90

(54) **INFORMATION PROCESSING DEVICE AND INFORMATION PROCESSING METHOD**
INFORMATIONSVERARBEITUNGSVORRICHTUNG UND INFORMATIONSVERARBEITUNGSVERFAHREN
DISPOSITIF DE TRAITEMENT D'INFORMATIONS ET PROCÉDÉ DE TRAITEMENT D'INFORMATIONS

(30) Priority: 02.02.2017 JP 2017017480
(43) Date of publication of application: 11.12.2019
(73) Proprietor: Sony Group Corporation, Tokyo 108-0075 (JP)
(72) Inventor: IKEDA, Nobuho, Tokyo 108-0075 (JP); IKEDA, Hiroshi, Tokyo 108-0075 (JP); SATO, Hideyuki, Tokyo 108-0075 (JP); NAKAO, Yuta, Tokyo 108-0075 (JP); INABA, Seijiro, Tokyo 108-0075 (JP)
(74) Representative: D Young & Co LLP
(86) International application number: PCT/JP2017/040128
(87) International publication number: WO 2018/142705

(56) References cited:
- JP-A- 2016 123 004
- US-A1- 2011 228 103
- US-A1- 2015 229 835

## Description

### TECHNICAL FIELD

The present disclosure relates to an information processing apparatus and an information processing method.

### BACKGROUND ART

A technology of issuing a notification regarding a tilt of a capturing apparatus is being developed. As a technology of performing tilt guide display which is suitable for a mode that is set in a capturing apparatus, a technology described in Patent Document 1 mentioned below may be cited, for example.

### CITATION LIST

Patent Document 1: Japanese Patent Application Laid-Open No. 2008-17036 Other previously proposed arrangements are disclosed in JP 2016 123004 A, US 2015/229835 A1, and US 2011/228103 A1.

### SUMMARY OF THE INVENTION

The invention is defined by the appended claims.

### PROBLEMS TO BE SOLVED BY THE INVENTION

When taking sports as an example, an area (three-dimensional space) where a sport such as tennis, basketball, volleyball, soccer or ping-pong is played is captured by a capturing apparatus to broadcast the sport.

Now, with sports as mentioned above, a position of a player and a position of a ball sometimes move greatly out of a tennis court, a basketball court, a volleyball court, a soccer field, a place where a ping-pong table is placed, or the like. Moreover, the capturing apparatus for capturing sports as mentioned above is, in many cases, arranged in a state where players and balls are absent.

Accordingly, it is difficult to arrange the capturing apparatus in such a way that players and balls are captured when a sport is being played, or in other words, it is difficult to arrange the capturing apparatus in such a way that an area where the sport as mentioned above is played is captured. Moreover, in a case where a person who is not familiar with a capturing target sport is to arrange the capturing apparatus, arrangement becomes even more difficult.

The present disclosure proposes novel and improved information processing apparatus and information processing method which are capable of aiding in arrangement of a capturing apparatus.

### SOLUTIONS TO PROBLEMS

According to the present disclosure, there is provided an information processing apparatus including a processing unit for issuing a notification regarding a relationship between an area to be captured by a capturing apparatus and the capturing apparatus, on the basis of area information specifying the area and information regarding the capturing apparatus that is arranged.

Furthermore, according to the present disclosure, there is provided an information processing method to be performed by an information processing apparatus, the method including the step of issuing a notification regarding a relationship between an area to be captured by a capturing apparatus and the capturing apparatus, on the basis of area information specifying the area and information regarding the capturing apparatus that is arranged.

### EFFECTS OF THE INVENTION

According to the present disclosure, it is possible to aid in arrangement of a capturing apparatus.

Additionally, the effect described above is not necessarily limitative, and any one of effects described in the present specification or other effects that may be grasped from the present specification may be achieved together with or instead of the effect described above.

### BRIEF DESCRIPTION OF DRAWINGS

Fig. 1 is an explanatory diagram showing an example of an information processing system to which an information processing method according to a present embodiment is applied.
Fig. 2 is a block diagram showing an example of a configuration of an information processing apparatus according to the present embodiment.
Fig. 3 is an explanatory diagram showing an example of a hardware configuration of the information processing apparatus according to the present embodiment.
Fig. 4 is an explanatory diagram showing an example of a three-dimensional space where a capturing apparatus forming the information processing system according to the present embodiment is arranged.
Fig. 5 is a flowchart showing an example of processing by the information processing method according to the present embodiment.
Fig. 6 is an explanatory diagram for describing an example of area information according to the present embodiment.
Fig. 7 is an explanatory diagram for describing an example of processing by the information processing method according to the present embodiment.
Fig. 8 is an explanatory diagram for describing an example of processing by the information processing method according to the present embodiment.
Fig. 9 is an explanatory diagram for describing an example of processing by the information processing method according to the present embodiment.
Fig. 10 is an explanatory diagram for describing an example of processing by the information processing method according to the present embodiment.
Fig. 11 is an explanatory diagram for describing an example of processing by the information processing method according to the present embodiment.
Fig. 12 is an explanatory diagram for describing an example of processing by the information processing method according to the present embodiment.

### MODE FOR CARRYING OUT THE INVENTION

Hereinafter, a preferred embodiment of the present disclosure will be described in detail with reference to the appended drawings. Additionally, in the present specification and the drawings, structural elements having a substantially same functional configuration will be denoted by a same reference sign, and a redundant description will be omitted.

Moreover, in the following, descriptions will be given in the following order.
1. Information Processing Method according to Present Embodiment
2. Program according to Present Embodiment

### (Information Processing Method according to Present Embodiment)

In the following, a case where an information processing apparatus according to the present embodiment performs processing by an information processing method according to the present embodiment will be cited as an example. An example of a configuration of the information processing apparatus according to the present embodiment will be described together with an example of processing by the information processing method according to the present embodiment.

Furthermore, in the following, a description will be given mainly of an example where the information processing method according to the present embodiment is applied to a case of capturing, by a capturing apparatus, an area where a sport, such as tennis, basketball, volleyball or ping-pong, is played.

Additionally, an example to which the information processing method according to the present embodiment is applied is not limited to the example of capturing, by a capturing apparatus, an area where a sport is played. For example, the information processing method according to the present embodiment is applicable to a case of capturing any predetermined area (three-dimensional space) by a capturing apparatus, such as a case of capturing, by a capturing apparatus, an area which is a target of crime prevention.

### [1] Outline of Information Processing Method according to Present Embodiment

As described above, it is difficult to arrange a capturing apparatus in such a way that players and balls are captured when a sport is being played.

Accordingly, the information processing apparatus according to the present embodiment issues, in relation to a capturing apparatus that is arranged, a notification regarding a relationship between an area to be captured by the capturing apparatus and the capturing apparatus.

The notification regarding a relationship between an area to be captured by a capturing apparatus according to the present embodiment and the capturing apparatus is a notification for aiding in arrangement of the capturing apparatus by a person who is to arrange the capturing apparatus, as described in an example given later, for example. In the following, the notification regarding a relationship between an area to be captured by a capturing apparatus according to the present embodiment and the capturing apparatus will be sometimes referred to as a "notification regarding a relationship with the capturing apparatus" or simply as a "notification regarding a relationship".

For example, the information processing apparatus according to the present embodiment issues the notification regarding the relationship with the capturing apparatus, on the basis of area information and information regarding the capturing apparatus that is arranged.

The area information according to the present embodiment is data specifying an area that is to be captured by the capturing apparatus. The information processing apparatus according to the present embodiment identifies the area to be captured by the capturing apparatus on the basis of the area information.

For example, an area as mentioned above where a sport is played is cited as the area to be captured by the capturing apparatus. Additionally, the area to be captured by the capturing apparatus is not limited to the area as mentioned above where a sport is played, and may be an area which is a target of crime prevention, as described above, for example.

In a case where the area to be captured by the capturing apparatus is an area where a sport is played, the area that is specified by the area information is specified for each sport. That is, the area specified by the area information includes areas according to types of sport, for example. Furthermore, in a case where the area to be captured by the capturing apparatus is an area which is a target of crime prevention, the area is specified on the basis of map information indicating a map or the like, for example.

In a case where there are a plurality of pieces of area information, as in a case where the area specified by the area information is specified for each sport, the information processing apparatus according to the present embodiment issues the notification regarding the relationship with the capturing apparatus on the basis of an area that is specified by the area information that is set from among the plurality of pieces of area information.

More specifically, for example, the information processing apparatus according to the present embodiment sets the area information corresponding to a predetermined setting operation that is detected, and issues the notification regarding the relationship with the capturing apparatus on the basis of the area specified by the area information that is set. As the predetermined setting operation according to the present embodiment, for example, one or two or more among an operation using an operation unit (described later), an operation using an external operation device such as a remote control, an operation by a gesture, an operation by voice may be cited, and the like.

In a case where the area specified by the area information is specified for each sport, a person who is to arrange the capturing apparatus sets the sport by an operation using an operation unit (described later) or the like. For example, a person who is to arrange the capturing apparatus sets a sport by performing an operation of selecting a type of sport displayed on a display screen. For example, the information processing apparatus according to the present embodiment sets the area information corresponding to a sport by reading, from a recording medium such as a storage unit (not shown), the area information corresponding to the sport that is set by a setting operation as described above. Then, the information processing apparatus according to the present embodiment issues the notification regarding the relationship with the capturing apparatus on the basis of the area specified by the area information that is set. In the following, an area that is specified by the area information corresponding to a sport that is set by a setting operation as described above will be sometimes referred to as an "area corresponding to a sport that is set".

As described above, by issuing the notification regarding the relationship with the capturing apparatus on the basis of an area corresponding to a sport that is set, arrangement of the capturing apparatus corresponding to the sport that is set may be aided.

An example of the area information according to the present embodiment, and an example of processing that uses the area information will be described later.

Moreover, the information regarding the capturing apparatus according to the present embodiment is data indicating an arranged state of the capturing apparatus that is arranged, for example. For example, the information regarding the capturing apparatus according to the present embodiment indicates a position of the capturing apparatus, a posture of the capturing apparatus, and a parameter of the capturing apparatus. For example, as the parameter of the capturing apparatus, a parameter indicating an internal state of the capturing apparatus, such as a focal distance or distortion in a lens optical axis direction, may be cited.

For example, the information processing apparatus according to the present embodiment estimates each of the position of the capturing apparatus, the posture of the capturing apparatus, and the parameter of the capturing apparatus on the basis of a captured image captured by the capturing apparatus . Then, the information processing apparatus according to the present embodiment issues the notification regarding the relationship with the capturing apparatus on the basis of information, regarding the capturing apparatus, indicating each of the estimated position of the capturing apparatus, the estimated posture of the capturing apparatus, and the estimated parameter of the capturing apparatus. The information regarding the capturing apparatus may be data indicating the position of the capturing apparatus, the posture of the capturing apparatus, and the parameter of the capturing apparatus, or may be a data group including data indicating the position of the capturing apparatus, data indicating the posture of the capturing apparatus, and data indicating the parameter of the capturing apparatus.

Additionally, the information processing apparatus according to the present embodiment may issue the notification regarding the relationship with the capturing apparatus on the basis of information, regarding the capturing apparatus, indicating each of the position of the capturing apparatus, the posture of the capturing apparatus, and the parameter of the capturing apparatus estimated by an external device of the information processing apparatus according to the present embodiment.

An example of processing that uses the information regarding the capturing apparatus will be described later.

The information processing apparatus according to the present embodiment issues the notification regarding the relationship with the capturing apparatus by notification by a visual method of displaying notification contents on a display screen, auditory notification of causing an audio output device, such as a speaker, to output audio indicating notification contents, or a combination thereof, for example.

As the notification regarding the relationship according to the present embodiment, one or both of a notification described in (a) described later, and a notification described in (b) described later may be cited, for example.

### (a) First Example of Notification Regarding Relationship

The information processing apparatus according to the present embodiment issues, as the notification regarding the relationship, a notification of a state of the capturing apparatus with respect to an area to be captured by the capturing apparatus, such as the area where a sport is to be played as described above.

The area here to be captured by the capturing apparatus is identified on the basis of the area information.

Moreover, the state of the capturing apparatus with respect to the area according to the present embodiment is expressed by a capturing range of the capturing apparatus with respect to the area to be captured by the capturing apparatus, for example. That is, the information processing apparatus according to the present embodiment issues, as the notification regarding the state of the capturing apparatus with respect to the area to be captured by the capturing apparatus, a notification regarding the capturing range of the capturing apparatus with respect to the area.

Additionally, the "state of the capturing apparatus with respect to the area expressed by the capturing range of the capturing apparatus with respect to the area to be captured by the capturing apparatus" described above may be rephrased as a "state of arrangement of the capturing apparatus with respect to the area to be captured by the capturing apparatus". That is, the information processing apparatus according to the present embodiment issues, as the notification regarding the state of the capturing apparatus with respect to the area to be captured by the capturing apparatus, a notification regarding arrangement of the capturing apparatus with respect to the area.

Due to the notification regarding the relationship according to the first example being issued, a person who is to arrange the capturing apparatus may grasp a relationship between the area to be captured by the capturing apparatus and the capturing range of the capturing apparatus . Accordingly, a person who is to arrange the capturing apparatus may more easily change the arrangement of the capturing apparatus to a more suitable arrangement.

Accordingly, due to the notification regarding the relationship according to the first example being issued, arrangement of the capturing apparatus by a person who is to arrange the capturing apparatus may be aided. A specific example of the notification regarding the relationship according to the first example will be given later.

### (b) Second Example of Notification Regarding Relationship

The information processing apparatus according to the present embodiment issues, as the notification regarding the relationship, a notification for aiding in changing the arrangement of the capturing apparatus.

As the notification here for aiding in changing the arrangement of the capturing apparatus according to the present embodiment, a notification for changing the arrangement of the capturing apparatus such that the area to be captured by the capturing apparatus is included in the capturing range of the capturing apparatus may be cited.

Furthermore, in a case where the information processing apparatus according to the present embodiment takes a plurality of capturing apparatuses as processing targets, or in other words, in a case where the information processing apparatus according to the present embodiment issues the notification regarding the relationship for each of a plurality of capturing apparatuses, the information processing apparatus according to the present embodiment further issues a notification for changing the arrangement of the capturing apparatus such that an overlapping area of capturing ranges of the plurality of capturing apparatuses in the area to be captured by the capturing apparatus is increased. As an example of the "notification for changing the arrangement of the capturing apparatus such that an overlapping area of capturing ranges of a plurality of capturing apparatuses is increased", a "notification for aiding in changing the arrangement of the capturing apparatus such that a result of aggregating information regarding a plurality of capturing apparatuses satisfies a predetermined state" described later may be cited. To increase the overlapping area of capturing ranges of a plurality of capturing apparatuses described above corresponds to a condition regarding a first restriction on changing the arrangement of the capturing apparatus.

Furthermore, in a case where the information processing apparatus according to the present embodiment issues the notification regarding the relationship for each of a plurality of capturing apparatuses, the information processing apparatus according to the present embodiment may further issue a notification for changing the arrangement of the capturing apparatus such that valid capturing distances of the plurality of capturing apparatuses are satisfied. As the valid capturing distance of the capturing apparatus according to the present embodiment, a "distance to a subject by which the capturing apparatus may normally capture the subject, such as a distance to a subject by which the capturing apparatus may capture the subject with a focus adjusted to the subject" may be cited, for example. Furthermore, the valid capturing distance of the capturing apparatus according to the present embodiment may be a "limit distance to a subject by which capturing may be performed in such a way that a size of the subject included in a captured image captured by the capturing apparatus is made a size which enables identification of the subject by predetermined image processing such as image recognition", for example. The valid capturing distance of the capturing apparatus according to the present embodiment is estimated from the parameter of the capturing apparatus, for example. That is, as a result of change in the arrangement of the capturing apparatus due to a notification by the information processing apparatus according to the present embodiment, each of a plurality of capturing apparatuses is enabled to capture a subject which is present in the area to be captured by the capturing apparatus while achieving sufficient performance. Here, satisfaction of the valid capturing distances of a plurality of capturing apparatuses described above corresponds to a condition regarding a second restriction on changing the arrangement of the capturing apparatuses.

For example, the information processing apparatus according to the present embodiment issues the notification for changing the arrangement of the capturing apparatus such that one of the condition regarding the first restriction or the condition regarding the second restriction is satisfied. Furthermore, for example, the information processing apparatus according to the present embodiment may issue the notification for changing the arrangement of the capturing apparatus within a range where the condition regarding the first restriction and the condition regarding the second restriction are satisfied. For example, the information processing apparatus according to the present embodiment calculates an arrangement which achieves a maximum evaluation value (i.e., an optimized arrangement) on the basis of a predetermined evaluation function, such as an evaluation function that takes a size of an area overlapping the valid capturing distance as a parameter, and issues the notification for changing the arrangement of the capturing apparatus such that the calculated arrangement is achieved.

Additionally, the conditions regarding the restrictions on changing the arrangement of the capturing apparatus according to the present embodiment are not limited to the condition regarding the first restriction described above and the condition regarding the second restriction described above. For example, the information processing apparatus according to the present embodiment may optimize the arrangement of the capturing apparatus by setting predetermined evaluation functions that take, as targets, two or more restrictions which are in a trade-off relationship with each other, such as a direction of moving the capturing apparatus away and a direction of moving the capturing apparatus closer.

More specifically, the information processing apparatus according to the present embodiment issues, as the notification for aiding in changing the arrangement of the capturing apparatus, a notification for changing one or two or more among an angle of view, an orientation, and a position of the capturing apparatus.

For example, the information processing apparatus according to the present embodiment identifies the position of the capturing apparatus with respect to the area to be captured by the capturing apparatus, on the basis of the position of the capturing apparatus indicated by the information regarding the capturing apparatus. Furthermore, for example, the information processing apparatus according to the present embodiment identifies the orientation of the capturing apparatus with respect to the area to be captured by the capturing apparatus (i.e., a posture of the capturing apparatus with respect to the area), on the basis of the posture of the capturing apparatus indicated by the information regarding the capturing apparatus. Moreover, for example, the information processing apparatus according to the present embodiment identifies the angle of view of the capturing apparatus on the basis of the parameter of the capturing apparatus indicated by the information regarding the capturing apparatus. Then, the information processing apparatus according to the present embodiment issues a "notification for changing one or two or more among the identified angle of view, the identified orientation, and the identified position of the capturing apparatus to suit capturing of the area to be captured by the capturing apparatus", for example. As an example of the notification for performing change to suit capturing of the area to be captured by the capturing apparatus according to the present embodiment, a "notification for aiding in changing the arrangement of the capturing apparatus such that a result of aggregating information regarding a plurality of capturing apparatuses satisfies a predetermined state" described later may be cited, for example.

Here, the information processing apparatus according to the present embodiment issues notifications regarding manners of changing the angle of view, the orientation, and the position of the capturing apparatus in a set order, for example. The information processing apparatus according to the present embodiment issues notifications regarding manners of changing respective items in the order of the angle of view, the orientation, and the position, for example. The information processing apparatus according to the present embodiment issues the notifications regarding manners of changing respective items in turn every set period of time, for example.

Furthermore, the information processing apparatus according to the present embodiment may simultaneously issue notifications regarding manners of changing two or more among the angle of view, the orientation, and the position of the capturing apparatus . In a case where not all the notifications regarding the angle of view, the orientation, and the position of the capturing apparatus are to be simultaneously issued, the information processing apparatus according to the present embodiment issues the notifications in turn every set period of time, in a similar manner as in the above-described case of issuing the notifications in a set order.

Due to the notification regarding the relationship according to the second example being issued, a person who is to arrange the capturing apparatus may change the arrangement of the capturing apparatus in accordance with notification contents. Accordingly, a person who is to arrange the capturing apparatus may more easily change the arrangement of the capturing apparatus to a more suitable arrangement.

Accordingly, due to the notification regarding the relationship according to the second example being issued, arrangement of the capturing apparatus by a person who is to arrange the capturing apparatus may be aided. A specific example of the notification regarding the relationship according to the second example will be given later.

As the notification regarding the relationship, the information processing apparatus according to the present embodiment performs one or both of the notification regarding the relationship according to the first example described in (a) described above, and the notification regarding the relationship according to the second example described in (b) described above, for example.

Accordingly, the information processing apparatus according to the present embodiment may aid in arranging the capturing apparatus.

Additionally, the notifications regarding the relationship according to the present embodiment are not limited to the notification regarding the relationship according to the first example described in (a) described above, and the notification regarding the relationship according to the second example described in (b) described above. For example, as another example of the notification regarding the relationship according to the present embodiment, a "notification indicating completion of arrangement of the capturing apparatus" described later may be cited.

### [2] Example of Processing by Information Processing Method according to Present Embodiment

Next, an example of processing by the above-described information processing method according to the present embodiment will be described while citing an example of an information processing system to which the information processing method according to the present embodiment is applied.

### [2-1] Example of Configuration of Information Processing System according to Present Embodiment

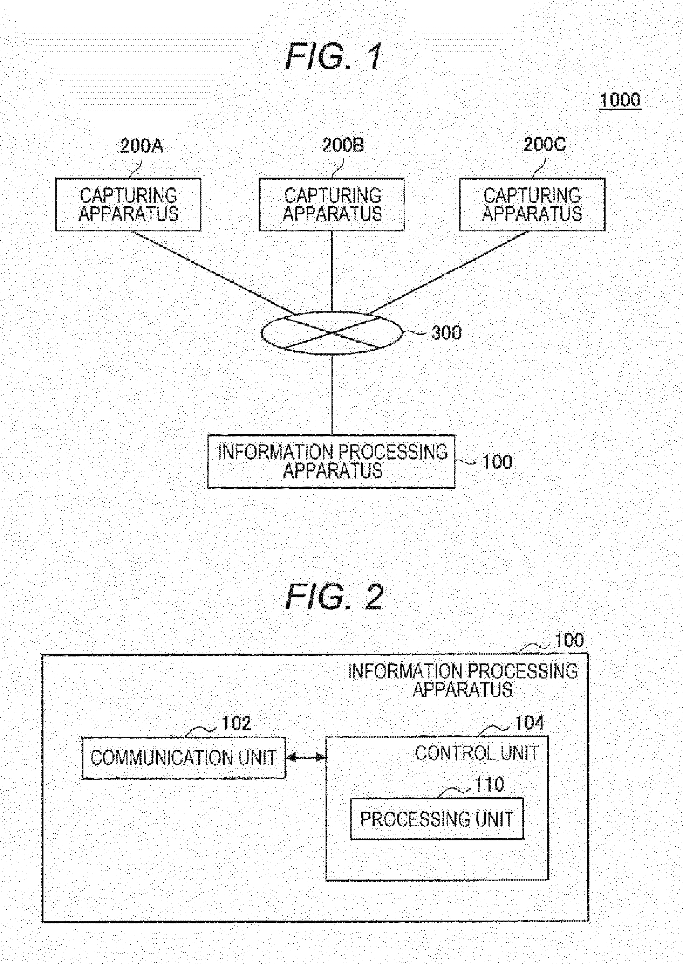

Fig. 1 is an explanatory diagram showing an example of an information processing system 1000 to which the information processing method according to the present embodiment is applied. For example, the information processing system 1000 includes an information processing apparatus 100, and capturing apparatuses 200A, 200B, 200C. In the following, one of the capturing apparatuses 200A, 200B, 200C or all of the capturing apparatuses 200A, 200B, 200C may be referred to as the "capturing apparatus (es) 200". Furthermore, in the following, the capturing apparatus may be referred to as a "camera".

For example, the information processing apparatus 100 and the capturing apparatus 200 are connected wirelessly or by cable through a network 300, and perform communication by communication through the network 300. For example, as the network 300 according to the present embodiment, a wired network such as a local area network (LAN) or a wide area network (WAN), a wireless network such as a wireless local area network (WLAN), or the Internet that uses a communication protocol such as a transmission control protocol/Internet protocol (TCP/IP), or the likemaybe cited. Additionally, in the information processing system according to the present embodiment, the information processing apparatus 100 and the capturing apparatus 200 may also directly perform communication without using the network 300.

Additionally, the configuration of the information processing system according to the present embodiment is not limited to the example shown in Fig. 1.

For example, Fig. 1 shows a configuration where three capturing apparatuses 200 are included, but the information processing system according to the present embodiment may include one capturing apparatus 200, two capturing apparatuses, or four or more capturing apparatuses 200. That is, the information processing system according to the present embodiment may include one or two or more capturing apparatuses 200.

Furthermore, the information processing system according to the present embodiment may further include a relay device (not shown) for relaying communication between the information processing apparatus 100 and the capturing apparatus 200. Furthermore, the relay device (not shown) in the information processing system according to the present embodiment may serve as a data aggregation/distribution device including a function of aggregating various pieces of data such as image data, and a function of distributing various pieces of data, for example. As the relay device (not shown), a router or the like may be cited, for example.

### [2-1-1] Information Processing Apparatus 100

The information processing apparatus 100 is an apparatus that performs processing by the above-described information processing method according to the present embodiment.

Fig. 2 is a block diagram showing an example of the configuration of the information processing apparatus 100 according to the present embodiment. For example, the information processing apparatus 100 includes a communication unit 102 and a control unit 104.

Furthermore, the information processing apparatus 100 may include a read only memory (ROM; not shown), a random access memory (RAM; not shown), a storage unit (not shown), an operation unit (not shown) that can be operated by a user of the information processing apparatus 100, a display unit (not shown) for displaying various screens on a display screen, and the like, for example. The information processing apparatus 100 connects between each of the structural elements mentioned above by a bus serving as a data transmission line, for example.

The ROM (not shown) stores control data such as programs, operation parameters and the like to be used by the control unit 104. The RAM (not shown) temporarily stores programs to be executed by the control unit 104, and the like.

The storage unit (not shown) is storage means provided in the information processing apparatus 100, and stores various pieces of data, such as data related to the information processing method according to the present embodiment, such as the area information, various applications, and the like, for example. Here, as the storage unit (not shown), a magnetic recording medium such as a hard disk, a non-volatile memory such as a flash memory, and the like may be cited, for example. Furthermore, the storage unit (not shown) may be detachable from the information processing apparatus 100.

As the operation unit (not shown), an operation input device described later may be cited. Furthermore, as the display unit (not shown), a display device described later may be cited.

### [Example Hardware Configuration of Information Processing Apparatus 100]

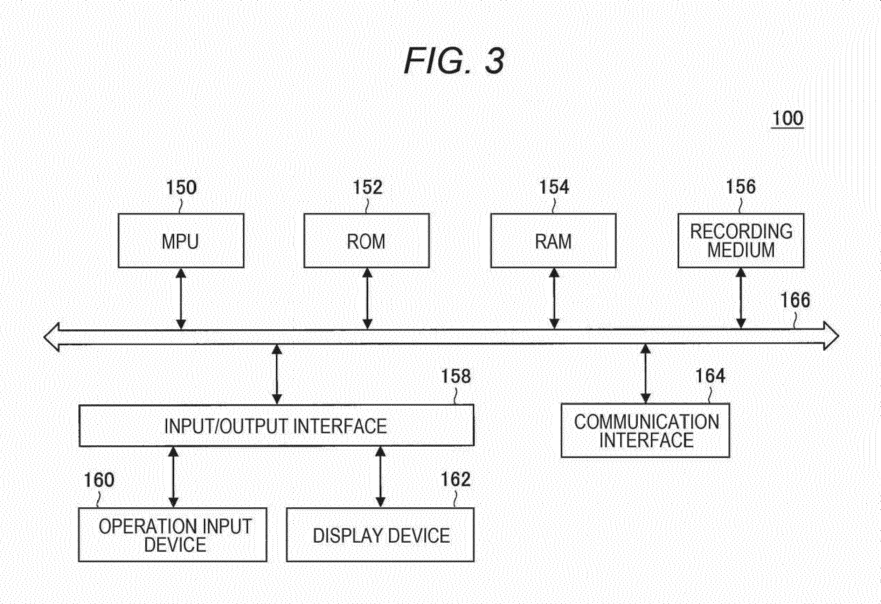

Fig. 3 is an explanatory diagram showing an example of a hardware configuration of the information processing apparatus 100 according to the present embodiment. For example, the information processing apparatus 100 includes an MPU150, aROM152, aRAM154, a recordingmedium156, an input/output interface 158, an operation input device 160, a display device 162, and a communication interface 164. Furthermore, the information processing apparatus 100 connects between each structural element by a bus 166 serving as a data transmission line, for example. Moreover, the information processing apparatus 100 is driven by power that is supplied from an internal power supply provided in the information processing apparatus 100, such as a battery, power that is supplied from an external power supply that is connected, or the like.

For example, the MPU 150 includes one or two or more processors including an operation circuit such as a micro processing unit (MPU), various processing circuits and the like, and functions as the control unit 104 for controlling the entire information processing apparatus 100. Furthermore, in the information processing apparatus 100, the MPU 150 serves a role of a processing unit 110 described later, for example. Additionally, the processing unit 110 may be configured of a dedicated (or a general-purpose) circuit (such as a processor separate from the MPU 150, for example).

The ROM 152 stores control data such as programs and operation parameters to be used by the MPU 150, and the like. For example, the RAM 154 temporarily stores programs to be executed by the MPU 150, and the like.

The recording medium 156 functions as the storage unit (not shown), and stores various pieces of data, such as data related to the information processing method according to the present embodiment, such as the area information, various applications and the like, for example. Here, as the recording medium 156, a magnetic recording medium such as a hard disk, and a non-volatile memory such as a flash memory may be cited, for example. Furthermore, the recording medium 156 may be detachable from the information processing apparatus 100.

For example, the input/output interface 158 connects the operation input device 160 and the display device 162. The operation input device 160 functions as the operation unit (not shown), and furthermore, the display device 162 functions as the display unit (not shown). Here, as the input/output interface 158, a universal serial bus (USB) terminal, a digital visual interface (DVI) terminal, a high-definition multimedia interface (HDMI; registered trademark) terminal, various processing circuits, and the like may be cited, for example.

Furthermore, the operation input device 160 is provided on the information processing apparatus 100, for example, and is connected inside the information processing apparatus 100 to the input/output interface 158. For example, as the operation input device 160, buttons, direction keys, a rotary selector such as a jog dial, a combination thereof, or the like may be cited.

Furthermore, the display device 162 is provided on the information processing apparatus 100, for example, and is connected inside the information processing apparatus 100 to the input/output interface 158. For example, as the display device 162, a liquid crystal display, an organic electro-luminescence display (organic EL display; referred to also as an organic light emitting diode (OLED) display), or the lime may be cited.

Additionally, it is needless to say that the input/output interface 158 can be connected to an external device such as an operation input device (such as a keyboard or a mouse) outside the information processing apparatus 100, an external display device or the like. Moreover, the display device 162 may be a device, such as a touch panel, by which display and user operation may be performed, for example.

The communication interface 164 is communication means provided in the information processing apparatus 100, and functions as the communication unit 102 for communicating with an external device such as the capturing apparatus 200, wirelessly or by cable, through the network 300 (or directly) . Here, as the communication interface 164, a communication antenna and a radio frequency (RF) circuit (wireless communication), an IEEE 802.15.1 port and a transmission/reception circuit (wireless communication), an IEEE 802.11 port and a transmission/reception circuit (wireless communication), a local area network (LAN) terminal and a transmission/reception circuit (wired communication), and the like may be cited, for example. Furthermore, the communication interface 164 may have any configuration that is compatible with the network 300.

For example, the information processing apparatus 100 performs processing by the information processing method according to the present embodiment by the configuration shown in Fig. 3. Additionally, the hardware configuration of the information processing apparatus 100 according to the present embodiment is not limited to the configuration shown in Fig. 3.

For example, in the case of performing communication with an external device or the like through an external communication device that is connected, the information processing apparatus 100 does not have to include the communication interface 164. Furthermore, the communication interface 164 may be capable of performing communication with one or two or more external devices or the like by a plurality of communication schemes.

Moreover, the information processing apparatus 100 may further include a capturing device, for example. In a case where the information processing apparatus 100 includes a capturing device, the capturing device functions as a capturing unit (not shown) for generating a captured image (a moving image or a still image) by performing capturing.

Moreover, the information processing apparatus 100 may further include an audio output device such as a speaker, for example.

Furthermore, the information processing apparatus 100 may adopt a configuration not including the recording medium 156, the operation input device 160, and the display device 162, for example.

Moreover, the information processing apparatus 100 may adopt a configuration according to an example application of the information processing apparatus 100 described later, for example.

Moreover, for example, a part or all of the configuration shown in Fig. 3 (or a configuration according to a modification) may be implemented by one or two or more integrated circuits (ICs).

Referring back to Fig. 2, an example of the configuration of the information processing apparatus 100 will be described. The communication unit 102 is communication means provided in the information processing apparatus 100, and communicates with an external device such as the capturing apparatus 200, wirelessly or by cable, through the network 300 (or directly) . Furthermore, communication by the communication unit 102 is controlled by the control unit 104, for example.

Here, a communication antenna and an RF circuit, or a LAN terminal and a transmission/reception circuit, or the like may be cited as the communication unit 102, for example, but the configuration of the communication unit 102 is not limited thereto. For example, the communication unit 102 may adopt a configuration according to any standard allowing communication to be performed, such as a USB terminal and a transmission/reception circuit, or any configuration which is capable of performing communication with an external device through the network 300. Moreover, the communication unit 102 may be capable of performing communication with one or two or more external devices or the like by a plurality of communication schemes.

For example, the control unit 104 is configured of an MPU or the like, and serves to control the entire information processing apparatus 100. Furthermore, the control unit 104 includes the processing unit 110, for example, and serves as a main actor of the processing by the information processing method according to the present embodiment.

The processing unit 110 serves as a main actor of the processing by the information processing method according to the present embodiment. For example, the processing unit 110 issues the notification regarding the relationship with the capturing apparatus on the basis of the area information and the information regarding the capturing apparatus. For example, as the notification regarding the relationship, the processing unit 110 performs one or both of the notification regarding the relationship according to the first example described in (a) described above, and the notification regarding the relationship according to the second example described in (b) described above.

The information processing apparatus 100 performs the processing by the information processing method according to the present embodiment by the configuration shown in Fig. 2, for example. Therefore, the information processing apparatus 100 may aid in arranging the capturing apparatus by the configuration shown in Fig. 2, for example.

Furthermore, the information processing apparatus 100 may achieve, by the configuration shown in Fig. 2, for example, the effect that is to be achieved by performing the processing by the information processing method according to the present embodiment.

Additionally, the configuration of the information processing apparatus according to the present embodiment is not limited to the configuration shown in Fig. 2.

For example, the information processing apparatus according to the present embodiment may include the processing unit 110 shown in Fig. 2, separately from the control unit 104 (i.e., the processing unit 110 may be implemented by another processing circuit, for example).

Furthermore, the configuration for realizing the processing by the information processing method according to the present embodiment is not limited to the configuration shown in Fig. 2, and a configuration may be adopted according to a manner of dividing the processing by the information processing method according to the present embodiment.

Furthermore, for example, in the case of performing communication with an external device through an external communication device having similar function and configuration as the communication unit 102, the information processing apparatus according to the present embodiment does not have to include the communication unit 102.

### [2-1-2] Capturing Apparatus 200

The capturing apparatus 200 is a capturing apparatus that is arranged to capture an area where a sport is played, for example, and generates a captured image (a moving image or a still image) by performing capturing.

For example, the capturing apparatus 200 includes a lens/imaging device and a signal processing circuit. For example, the lens/imaging device is configured of an optical lens, and an image sensor that uses a plurality of imaging devices including a complementary metal oxide semiconductor (CMOS) or the like. For example, the signal processing circuit includes an automatic gain control (AGC) circuit and an analog to digital converter (ADC), and converts an analog signal generated by the imaging device to a digital signal (image data) . Furthermore, the signal processing circuit performs various processes related to RAW development, for example. Moreover, the signal processing circuit may perform various types of signal processing, such as white balance correction processing, color tone correction processing, gamma correction processing, YCbCr conversion processing, and edge enhancement processing, for example. Moreover, the capturing apparatus 200 may perform any image processing by using operation resources of the signal processing circuit.

Furthermore, for example, the capturing apparatus 200 includes a communication device, or is connected to an external communication device. The capturing apparatus 200 communicates with an external device such as the information processing apparatus 100, wirelessly or by cable, through the network 300 (or directly), by the communication device that is provided or by the external communication device that is connected.

Moreover, the capturing apparatus 200 may include a display device, or may be connected to an external display device.

Additionally, the configuration of the capturing apparatus 200 is not limited to the example described above, and a configuration according to an example application of the capturing apparatus 200 described later may be adopted.

### [2-2] Example of Processing by Information Processing Method according to Present Embodiment

An example of processing by the information processing method according to the present embodiment will be described, taking the information processing system 1000 shown in Fig. 1 as an example.

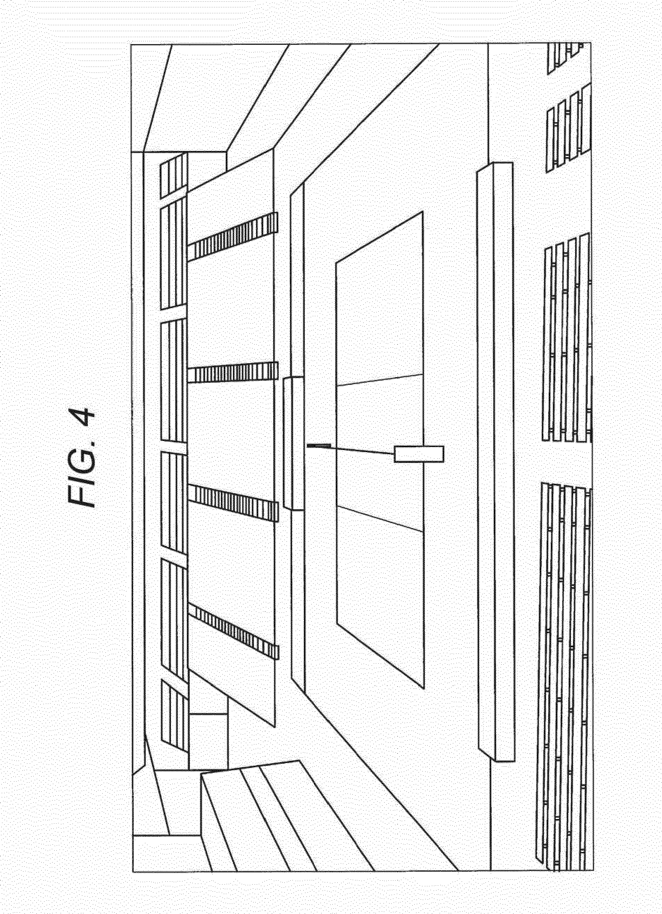

Fig. 4 is an explanatory diagram showing an example of a three-dimensional space where the capturing apparatus 200 forming the information processing system 1000 according to the present embodiment is arranged. Fig. 4 shows an example where the three-dimensional space where the capturing apparatus 200 is arranged is a gym including a volleyball court.

Furthermore, in the following, an example of processing by the information processing method according to the present embodiment is described, citing as an example a case where the capturing apparatus 200 is arranged in the gym shown in Fig. 4, or in other words, a case where the information processing method according to the present embodiment is applied to capturing of an area where a sport is played.

As described above, arrangement of the capturing apparatus for capturing a sport is, in many cases, performed in a state where players and balls are absent. More specifically, capturing of a sport by the capturing apparatus is performed along a flow of "preparation of equipment", "arrangement of capturing apparatus", "test capturing by arranged capturing apparatus", "main capturing by arranged capturing apparatus", and "removal of equipment", for example. The information processing method according to the present embodiment is applied at a stage of "arrangement of capturing apparatus" in the flow described above, for example.

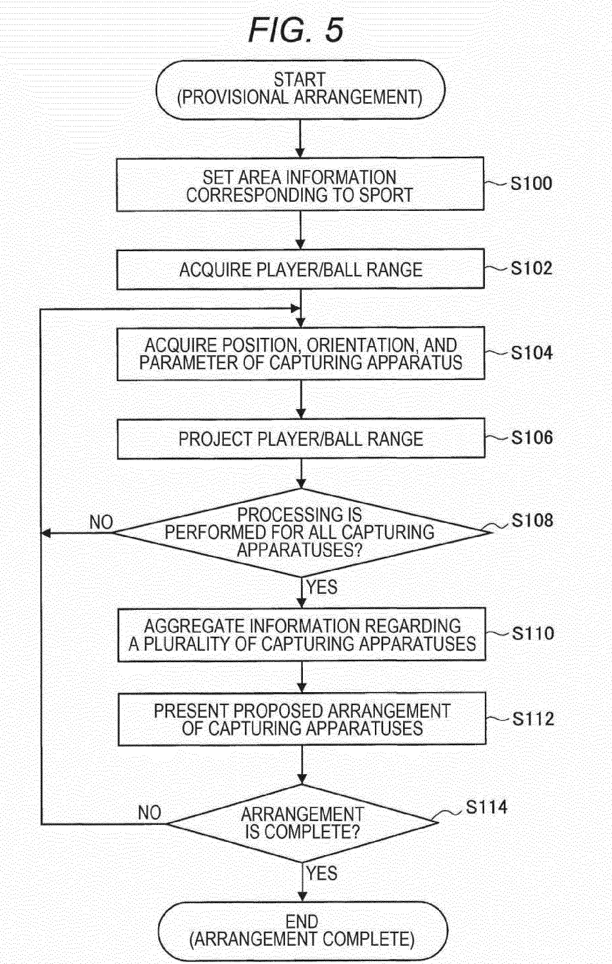

Fig. 5 is a flowchart showing an example of processing by the information processing method according to the present embodiment. Fig. 5 shows an example of processing up to completion of arrangement after provisional arrangement of the capturing apparatus 200.

The information processing apparatus 100 sets area information corresponding to a sport (S100) . For example, in a case where the capturing apparatus 200 is to be arranged in the gym shown in Fig. 4, area information corresponding to volleyball (an example of sport) is set in step S100.

For example, the information processing apparatus 100 sets area information corresponding to a sport by reading area information corresponding to a detected setting operation from a recording medium such as the storage unit (not shown). Furthermore, the information processing apparatus 100 transmits the area information read from the recording medium to each capturing apparatus 200.

Additionally, the area information may be stored in each of one or some or all of the capturing apparatuses 200 forming the information processing system 1000, or may be distributed and stored in one or some or all of the apparatuses forming the information processing system 1000.

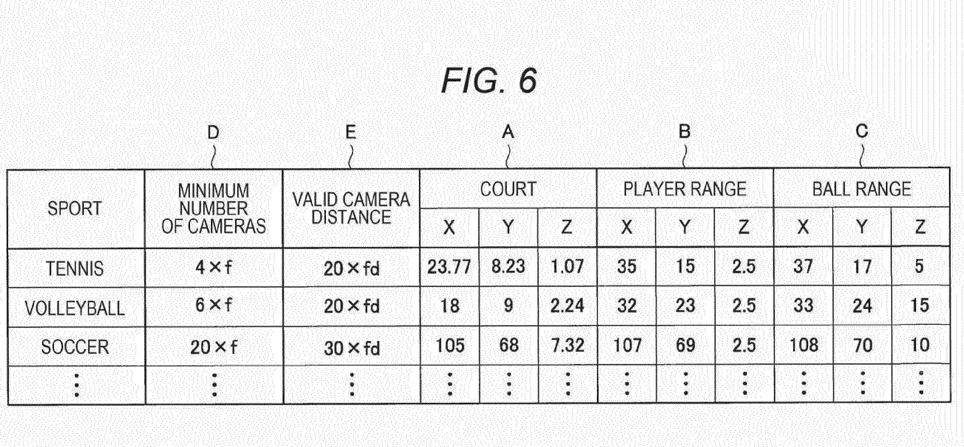

Fig. 6 is an explanatory diagram for describing an example of the area information according to the present embodiment. Fig. 6 shows an example of a table (or a database) recording the area information for each sport.

A "court" indicated by A in Fig. 6 is data specifying an area of a court or a field where a respective sport is played. Furthermore, a "player range" indicated by B in Fig. 6 is data specifying an area where players of each sport possibly move. Furthermore, a "ball range" indicated by C in Fig. 6 is data specifying an area where a ball used in each sport possibly moves.

The area indicated by each of the "court" indicated by A in Fig. 6, the "player range" indicated by B in Fig. 6, and the "ball range" indicated by C in Fig. 6 is expressed by distances (distances in a horizontal direction, a vertical direction, and a depth direction, respectively), with a predetermined position set in the court or the field taken as a point of origin. Each of the "court" indicated by A in Fig. 6, the "player range" indicated by B in Fig. 6, and the "ball range" indicated by C in Fig. 6 shows an example where a position of a certain corner of the court or the field is taken as the point of origin, and where the distances are expressed in units of meters. Additionally, the predetermined position mentioned above is not limited to the position of a corner of the court or the field. For example, the predetermined position mentioned above may be a center position of the court or the field. In a case where the predetermined position is the center position, an area indicated by each of the "court" indicated by A in Fig. 6, the "player range" indicated by B in Fig. 6, and the "ball range" indicated by C in Fig. 6 may be identified by performing processing assuming that the court or the field is symmetric.

Here, data indicated by each of the "court" indicated by A in Fig. 6, the "player range" indicated by B in Fig. 6, and the "ball range" indicated by C in Fig. 6 corresponds to an example of the area information.

Furthermore, for example, as shown in D in Fig. 6 and E in Fig. 6, the table recording the area information for each sport may include "minimum number of cameras" indicating the minimum number of cameras required to capture the area of a target sport, and a "valid camera distance" indicating a valid capturing distance of the capturing apparatus that is used. Here, each of the "minimum number of cameras" indicated by D in Fig. 6 and the "valid camera distance" indicated by E in Fig. 6 is varied depending on a focal distance, an image size of the like of the capturing apparatus, for example. Here, the "valid camera distance" mentioned above corresponds to the valid capturing distance of the capturing apparatus described above.

Referring back to Fig. 5, an example of the processing by the information processing method according to the present embodiment will be described. The information processing apparatus 100 acquires a player/ball range (S102) . Here, the player/ball range acquired in step S102 corresponds to an example of the area to be captured by the capturing apparatus according to the present embodiment.

For example, the information processing apparatus 100 acquires the player/ball range by performing calculation of determining the player/ball range on the basis of the area information set in step S100. For example, as the calculation of determining the player/ball range, calculation of determining a smallest area including the area indicated by the "court" indicated by A in Fig. 6, the area indicated by the "player range" indicated by B in Fig. 6, and the area indicated by the "ball range" indicated by C in Fig. 6 may be cited.

Additionally, the method of acquisition of the player/ball range by the information processing apparatus 100 is not limited to the example described above. For example, the information processing apparatus 100 may also acquire the player/ball range by acquiring the result of calculation of determining the player/ball range performed by the capturing apparatus 200, from the capturing apparatus 200 through communication.

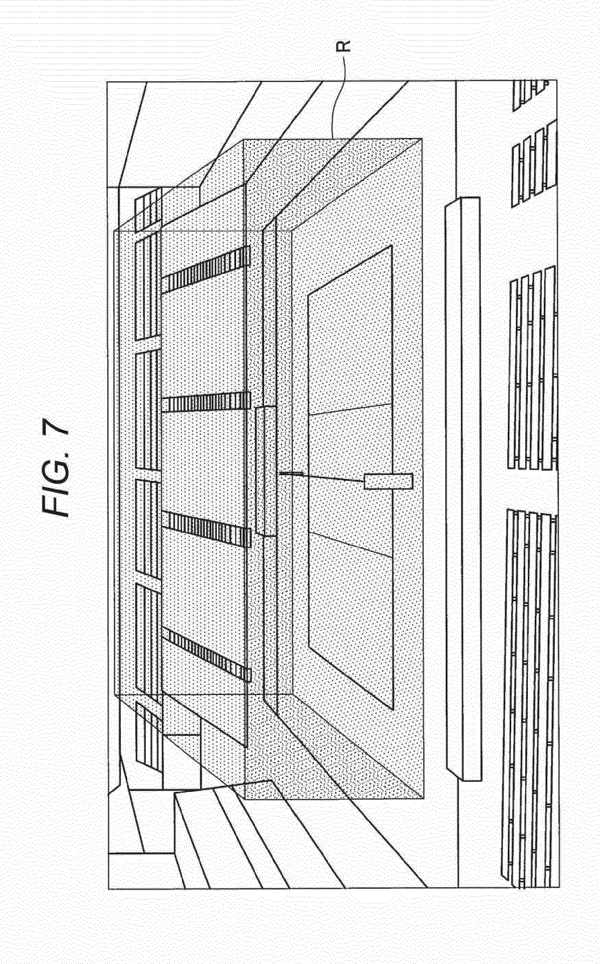

Fig. 7 is an explanatory diagram for describing an example of the processing by the information processing method according to the present embodiment, and shows an example of the player/ball range that is acquired in step S102 in Fig. 5.

For example, in a case where the capturing apparatus 200 is arranged in the gym shown in Fig. 4, the player/ball range is set in step S100, as indicated by a reference sign R in Fig. 7. In the following, the player/ball range that is acquired in step S102 in Fig. 5, such as the range indicated by the reference sign R in Fig. 7, will be referred to as a "player/ball range R".

Referring back to Fig. 5, an example of the processing by the information processing method according to the present embodiment will be described. The information processing apparatus 100 acquires the position, the orientation, and the parameter of the capturing apparatus 200 (S104).

For example, the information processing apparatus 100 acquires the position and the orientation of each capturing apparatus 200, by associating a feature quantity detected from a captured image acquired from each capturing apparatus 200 and a feature quantity specified by information unique to the sport that is set. As the feature quantity specified by information unique to the sport, "a plurality of predetermined positions in the court with a known positional relationship" may be cited, for example . As specific examples of the plurality of predetermined positions in the court in a case where the sport is volleyball, positions of four corners of the court, intersecting positions of lines, a position of a net, positions of poles supporting the net, and the like may be cited, for example.

The information processing apparatus 100 acquires the feature quantity from a captured image by performing image processing of detecting a predetermined position in the captured image, for example. Then, the information processing apparatus 100 performs pattern matching between the feature quantity detected from the captured image and the feature quantity specified by the information unique to the sport, for example . By performing the pattern matching as described above, the information processing apparatus 100 may estimate the position of the capturing apparatus 200 with respect to the court indicated by the information unique to the sport, for example. Furthermore, by performing the pattern matching as described above, for example, the information processing apparatus 100 may estimate the posture of the capturing apparatus 200 with respect to the court indicated by the information unique to the sport, and may estimate the orientation of the capturing apparatus 200 with respect to the court.

Additionally, themethodof estimating the position and the orientation of the capturing apparatus 200 on the basis of the captured image is not limited to the example described above. The information processing apparatus 100 may perform any processing which enables estimation of the position and the orientation of the capturing apparatus 200 based on the captured image, such as a method of using Structure from Motion.

Furthermore, for example, the information processing apparatus 100 estimates the parameter of the capturing apparatus 200 on the basis of the feature quantity detected from the captured image and the feature quantity specified by the information unique to the sport. The information processing apparatus 100 may estimate the parameter of the capturing apparatus 200 by using a technology called camera calibration. For example, the information processing apparatus 100 estimates the parameter of the capturing apparatus 200 by using calibrate Camera provided by OpenCV, which is an image processing library.

For example, data indicating each of the position of the capturing apparatus 200, the orientation of the capturing apparatus 200, and the parameter of the capturing apparatus 200, which are estimated in step S104, corresponds to an example of information regarding the capturing apparatus.

Referring back to Fig. 5, an example of the processing by the information processing method according to the present embodiment will be described. The information processing apparatus 100 projects the player/ball range R acquired in step S102 to the captured image of each capturing apparatus 200 (S106).

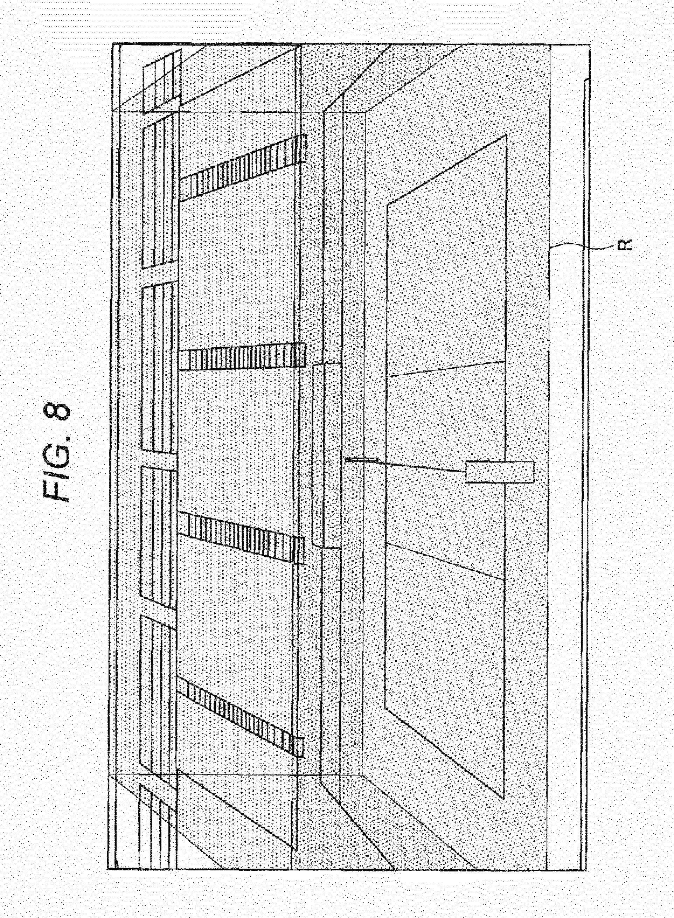

Fig. 8 is an explanatory diagram for describing an example of the processing by the information processing method according to the present embodiment, and shows an example of a captured image obtained by projecting the player/ball range R in step S106 in Fig. 5 to the captured image of a certain capturing apparatus 200.

For example, the information processing apparatus 100 displays the captured image where the player/ball range R is projected, as shown in Fig. 8, on a display screen. As the display screen where the captured image where the player/ball range R is projected is displayed, the display device provided at the capturing apparatus 200 which captured the captured image before projection (or an external display device which is connected thereto) may be cited, for example. Furthermore, the display screen where the captured image where the player/ball range R is projected is displayed may be a display screen of any display device that can be checked by a person who is to arrange the capturing apparatus 200, such as a display screen of the display unit (not shown) provided at the information processing apparatus 100.

As described above, due to the captured image where the player/ball range R is projected being displayed on a display screen, a person who is to arrange the capturing apparatus 200 may visually grasp a relationship between the player/ball range R (an example of the area to be captured by the capturing apparatus 200) and the capturing range of the capturing apparatus 200. That is, display, by the information processing apparatus 100, of the captured image where the player/ball range R is projected, on a display screen, corresponds to an example of the notification regarding the relationship according to the first example described in (a) described above .

Referring back to Fig. 5, an example of the processing by the information processing method according to the present embodiment will be described. The information processing apparatus 100 determines whether or not processing is already performed for all the capturing apparatuses 200 which are targets of arrangement (S108) . As all the capturing apparatuses 200 which are targets of arrangement, all the capturing apparatuses 200 forming the information processing system 1000 may be cited, for example.

For example, in a case where the positions of all the capturing apparatuses 200 which are targets of arrangement are estimated, the information processing apparatus 100 determines that processing is already performed for all the capturing apparatuses 200.

In a case where it is not determined in step S108 that processing is already performed for all the capturing apparatuses 200, the information processing apparatus 100 repeats the processing from step S104.

Furthermore, in a case where it is determined in step S108 that processing is already performed for all the capturing apparatuses 200, the information processing apparatus 100 aggregates information regarding the plurality of capturing apparatuses 200 (S110).

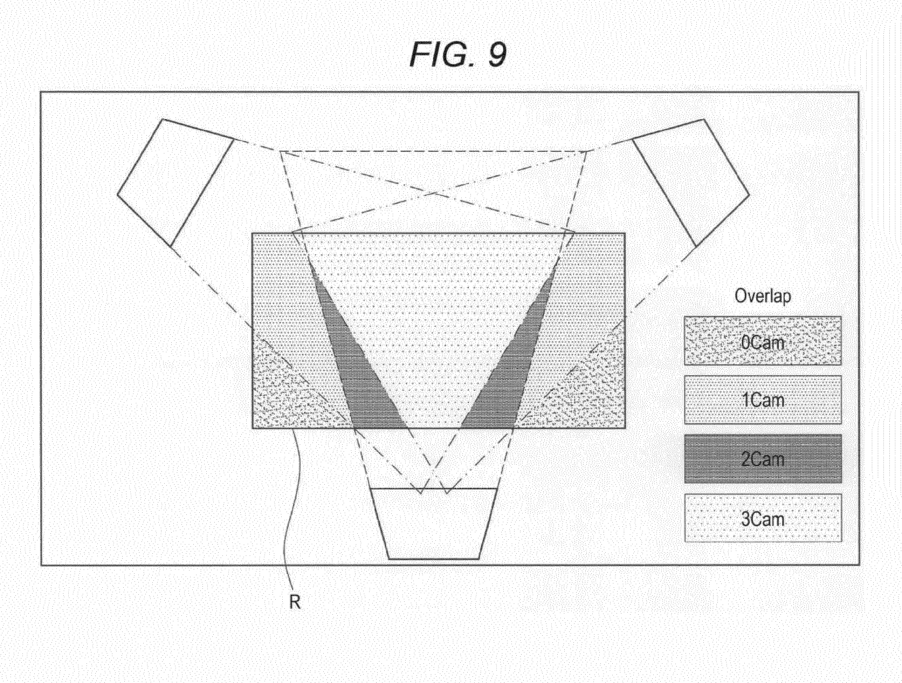

Fig. 9 is an explanatory diagram for describing an example of the processing by the information processing method according to the present embodiment, and shows an example of a result of aggregating information regarding the capturing apparatuses 200A, 200B, 200C in step S110 in Fig. 5. Here, to increase visibility, for example, the player/ball range R is represented as a plane in Fig. 9. Additionally, it is needless to say that aggregation may be performed in a similar manner as in Fig. 9 even if the player/ball range R is represented as a three-dimensional space.

In Fig. 9, "0Cam" indicates an area, in the player/ball range R, which is not captured by any capturing apparatus 200 among the capturing apparatuses 200A, 200B, 200C. Furthermore, in Fig. 9, "1Cam" indicates an area, in the player/ball range R, which is captured by only one capturing apparatus 200 among the capturing apparatuses 200A, 200B, 200C. Moreover, inFig. 9, "2Cam" indicates an area, in the player/ball range R, which is captured by two capturing apparatuses 200 among the capturing apparatuses 200A, 200B, 200C. Moreover, in Fig. 9, "3Cam" indicates an area, in the player/ball range R, which is captured by all of the capturing apparatuses 200A, 200B, 200C. That is, the example shown in Fig. 9 shows an example where the player/ball range R is classified into four areas according to overlapping states of the capturing ranges of the capturing apparatuses 200.

Additionally, the result of aggregating information regarding a plurality of capturing apparatuses 200 is not limited to the example shown in Fig. 9. For example, the player/ball range R may be classified into two types of a desirable area and a non-desirable area (poor area) according to the overlapping states of the capturing ranges of the capturing apparatuses 200. For example, the areas "2Cam" and "3Cam" shown in Fig. 9 are classified into desirable areas, and the areas "0Cam" and "1Cam" are classified into non-desirable areas.

Furthermore, in step S110, the information processing apparatus 100 may display, on the display screen, an image indicating the result of aggregating information regarding the plurality of capturing apparatuses 200 as shown in Fig. 9. In a case where an image indicating the result of aggregating information regarding the plurality of capturing apparatuses 200 is displayed on the display screen, the classified areas of the player/ball range R are color coded on a per area basis, for example, so as to be visually recognized as different areas.

As the display screen where an image indicating the result of aggregating information regarding a plurality of capturing apparatuses 200 is displayed, the display device provided at the capturing apparatus 200 which captured the captured image before projection (or an external display device which is connected thereto) may be cited, for example. Furthermore, the display screen where an image indicating the result of aggregating information regarding a plurality of capturing apparatuses 200 is displayed may be a display screen of any display device that can be checked by a person who is to arrange the capturing apparatus 200, such as the display screen of the display unit (not shown) provided at the information processing apparatus 100.

Due to an image indicating the result of aggregating information regarding a plurality of capturing apparatuses 200 being displayed on a display screen as described above, a person who is to arrange the capturing apparatus 200 may visually grasp the relationship between the player/ball range R (an example of the area to be captured by the capturing apparatus 200) and the capturing range of the capturing apparatus 200. That is, display, by the information processing apparatus 100, of an image indicating the result of aggregating information regarding a plurality of capturing apparatuses 200 on a display screen corresponds to an example of the notification regarding the relationship according to the first example described in (a) described above.

Additionally, an image indicating the result of aggregating information regarding a plurality of capturing apparatuses 200 is not limited to the example shown in Fig. 9.

For example, the information processing apparatus 100 may display, on a display screen, a captured image on which areas, as shown in Fig. 9, obtained by classifying the player/ball range R are superimposed. For example, the information processing apparatus 100 superimposes, by projection transformation, the areas obtained by classifying the player/ball range R on a captured image captured by each capturing apparatus 200.

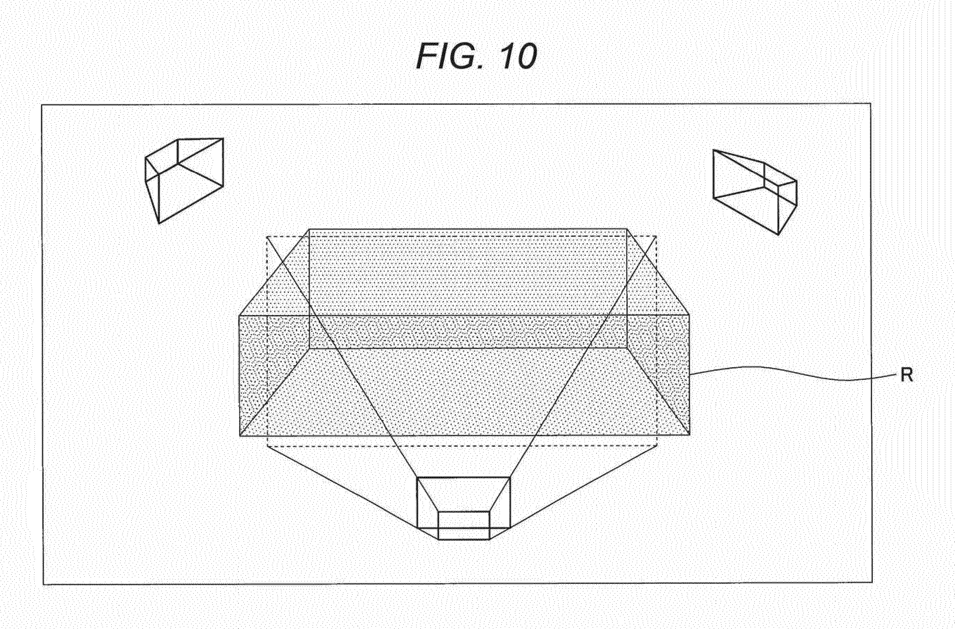

Fig. 10 is an explanatory diagram for describing an example of the processing by the information processing method according to the present embodiment, and shows another example of an image indicating the result of aggregating information regarding a plurality of capturing apparatuses 200.

As shown in Fig. 10, the information processing apparatus 100 may also display, on a display screen, an image indicating the capturing range of the capturing apparatus 200 with respect to the player/ball range R on a per capturing apparatus 200 basis.

For example, a mechanism allowing theresultof aggregating information regarding a plurality of capturing apparatuses 200 to be checked on a per capturing apparatus 200 basis is achieved by "display, on a display screen, of a captured image on which areas obtained by classifying the player/ball range R are superimposed" or "display, on a display screen, of an image, as shown in Fig. 10, indicating a capturing range of the capturing apparatus 200 with respect to the player/ball range R".

Referring back to Fig. 5, an example of the processing by the information processing method according to the present embodiment will be described. The information processing apparatus 100 presents a proposed arrangement of the capturing apparatus 200 (S112). For example, the information processing apparatus 100 presents a proposed arrangement of the capturing apparatus 200 by issuing the notification regarding the relationship according to the second example described in (b) described above.

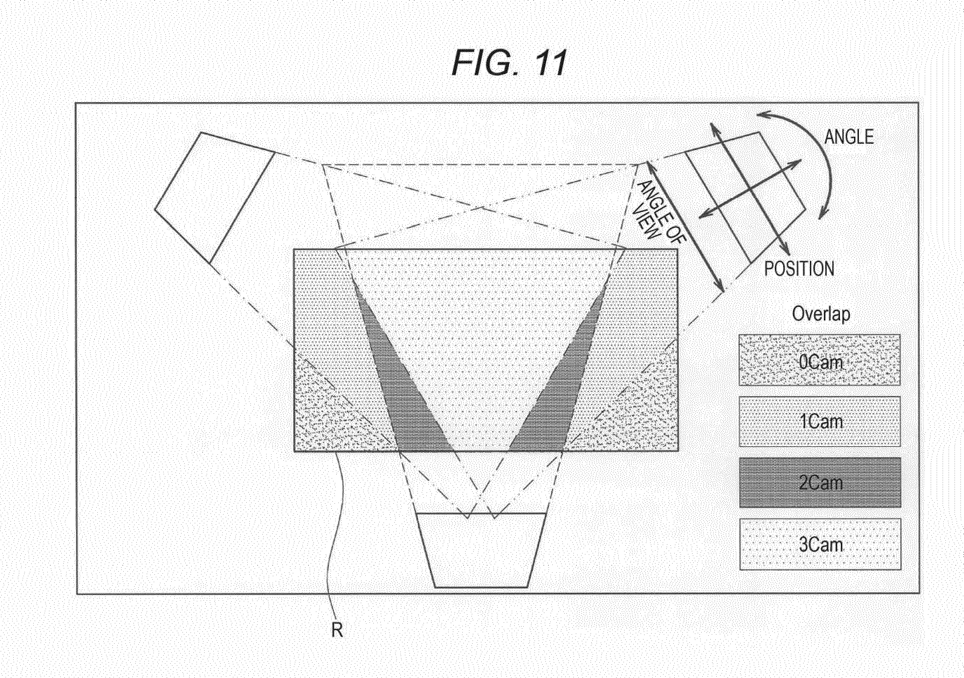

Fig. 11 is an explanatory diagram for describing an example of the processing by the information processing method according to the present embodiment, and shows an example of proposed arrangement with respect to the image, as shown in Fig. 9, indicating the result of aggregating information regarding a plurality of capturing apparatuses 200.

As shown in Fig. 11, the information processing apparatus 100 issues a notification for changing one or two or more among the angle of view, an angle, and the position of the capturing apparatus 200. Changing of the angle of the capturing apparatus 200 shown in Fig. 11 corresponds to changing of the orientation of the capturing apparatus 200.

Here, the image, as shown in Fig. 9, indicating the result of aggregating information regarding a plurality of capturing apparatuses 200 is an example where the player/ball range R is represented as a plane. Accordingly, Fig. 11 shows an "example where the information processing apparatus 100 issues a notification for changing the angle (orientation) of the capturing apparatus 200 in a plane direction, and also issues a notification for changing the position of the capturing apparatus 200 in the plane direction". Additionally, in a case where the player/ball range R is represented as a three-dimensional space in the image indicating the result of aggregating information regarding a plurality of capturing apparatuses 200, the information processing apparatus 100 may cause one or both of the angle in the plane direction and the angle in a vertical direction to be changed. Furthermore, in a case where the player/ball range R is represented as a three-dimensional space, the information processing apparatus 100 may cause one or both of the position in the plane direction and the position in the vertical direction to be changed.

As described above, the information processing apparatus 100 issues notifications regarding manners of changing the angle of view, the angle (orientation), and the position of the capturing apparatus 200 in a set order, for example. Moreover, the information processing apparatus 100 may simultaneously issue notifications regarding manners of changing two or more among the angle of view, the angle (orientation), and the position of the capturing apparatus 200, for example.

Additionally, Fig. 11 shows a state where a proposed arrangement is presented for one capturing apparatus 200, but the information processing apparatus 100 presents the proposed arranged for each of all the capturing apparatuses 200 which are targets of arrangement, or for one or more capturing apparatuses 200 among the capturing apparatuses 200 which are targets of arrangement.

As described above, due to a proposed arrangement being presented to the capturing apparatus 200 which is a target of arrangement, a person who is to arrange the capturing apparatus 200 may change the arrangement of the capturing apparatus 200 according to the presented proposed arrangement (notification contents). Accordingly, a person who is to arrange the capturing apparatus 200 may more easily change the arrangement of the capturing apparatus 200 to a more suitable arrangement.

Referring back to Fig. 5, an example of the processing by the information processing method according to the present embodiment will be described. The information processing apparatus 100 determines whether or not arrangement of the capturing apparatuses 200 which are targets of arrangement is complete (S114).

For example, the information processing apparatus 100 determines whether or not the result of aggregating information regarding the plurality of capturing apparatuses 200 satisfies a predetermined state that is set. Then, in a case where the result of aggregating information regarding the plurality of capturing apparatuses 200 is determined to satisfy the predetermined state mentioned above, the information processing apparatus 100 determines that arrangement of the capturing apparatuses 200 is complete.

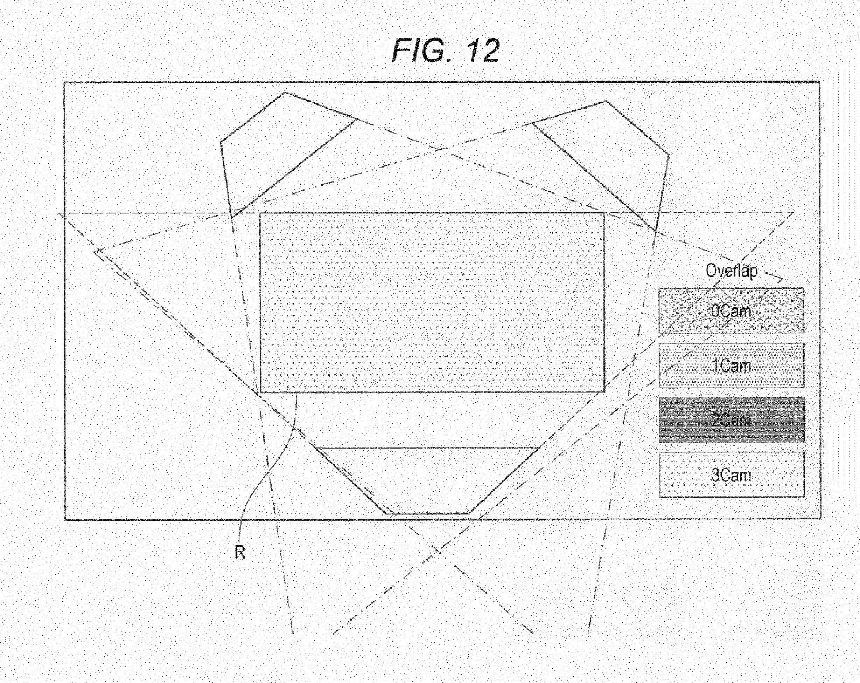

Fig. 12 is an explanatory diagram for describing an example of the processing by the information processing method according to the present embodiment, and shows an example of a case where the result of aggregating information regarding the plurality of capturing apparatuses 200 satisfies the predetermined state mentioned above.

As the predetermined state that is set, a state as shown in Fig. 12 where the entire player/ball range R is captured by all the capturing apparatuses 200 which are targets of arrangement (that is, a state where the entire player/ball range R is the area corresponding to "3Cam") may be cited, for example.

Additionally, the example of the predetermined state according to the present embodiment is not limited to the example described above. For example, the predetermined state may be a state where the entire player/ball range R is the desirable area described above. That is, as the predetermined state according to the present embodiment, a state is set where the entire player/ball range R is included in the capturing range of the capturing apparatus 200, and where the overlapping area of the capturing ranges of a plurality of capturing apparatuses 200 is increased.

Due to the state where the entire player/ball range R is included in the capturing range of the capturing apparatus 200 and the overlapping area of the capturing ranges of a plurality of capturing apparatuses 200 is increased being set as the predetermined state in the manner described above, players and balls may be stably and accurately tracked by the capturing apparatuses 200 that are arranged.

Furthermore, the predetermined state may be a fixed state that is set in advance, or may be a variable state which may be changed on the basis of an operation by a user or the like of the information processing apparatus 100.

Referring back to Fig. 5, an example of the processing by the information processing method according to the present embodiment will be described. In a case where completion of arrangement of the capturing apparatuses 200 is not determined in step S114, the information processing apparatus 100 repeats the processing from step S104.

Moreover, in a case where completion of arrangement of the capturing apparatuses 200 is determined in step S114, the information processing apparatus 100 ends the processing shown in Fig. 5.

Additionally, in a case where completion of arrangement of the capturing apparatuses 200 is determined, the information processing apparatus 100 may issue a notification indicating completion of arrangement of the capturing apparatuses 200 to a person arranging the capturing apparatuses 200. As the notification indicating completion of arrangement of the capturing apparatuses 200, visual notification of displaying an image, texts or the like indicating completion of arrangement on a display screen, auditory notification of outputting of audio indicating completion of arrangement from an audio output device, a combination thereof, and the like may be cited.

Due to the information processing apparatus 100 issuing the notification, as described above, indicating completion of arrangement of the capturing apparatuses 200, a person arranging the capturing apparatuses 200 may grasp, by the notification, completion of arrangement of the capturing apparatuses 200 which are targets of arrangement. Accordingly, arrangement of the capturing apparatuses 200 by a person who is to arrange the capturing apparatuses 200 may be aided by issuance of the notification, as described above, indicating completion of arrangement of the capturing apparatuses 200. That is, the notification, as described above, indicating completion of arrangement of the capturing apparatuses 200 corresponds to an example of the notification regarding the relationship with the capturing apparatus according to the present embodiment.

For example, arrangement of the capturing apparatuses 200 in the gym shown in Fig. 4 is realized by performing the processing shown in Fig. 5.

Here, with the processing described with reference to Fig. 5, the notification regarding the relationship is issued by "display, on a display screen, of a captured image where the player/ball range R is projected", "display, on a display screen, of an image indicating the result of aggregating information regarding a plurality of capturing apparatuses 200", and "presentation of a proposed arrangement of the capturing apparatuses 200", for example.

Accordingly, arrangement of the capturing apparatuses 200 by a person who is to arrange the capturing apparatuses 200 may be aided by performing the processing shown in Fig. 5, for example.

Furthermore, the information processing apparatus 100 issues a notification for aiding in changing of the arrangement of the capturing apparatuses 200 in such a way that a result of aggregating information regarding a plurality of capturing apparatuses 200 satisfies a predetermined state.

Here, as the predetermined state, a state is set where the overlapping area of the capturing ranges of a plurality of capturing apparatuses 200 is increased, such as a "state where the entire player/ball range R is captured by all the capturing apparatuses 200 which are targets of arrangement" or a "state where the entire player/ball range R is the desirable area described above", for example.

Accordingly, a person who is to arrange the capturing apparatuses 200 may arrange the capturing apparatuses 200 which are targets of arrangement, in such a way that players and balls may be stably and accurately tracked by the capturing apparatuses 200 that are arranged.

Additionally, it is needless to say that the example of the processing by the information processing method according to the present embodiment is not limited to the example shown in Fig. 5.

### [3] Example Application of Each Device Forming Information Processing System according to Present Embodiment

Heretofore, a description is given citing the information processing apparatus as a structural element of the information processing system according to the present embodiment, but the present embodiment is not limited to such a mode . For example, the present embodiment may be applied to various appliances which is capable of performing the processing by the information processing method according to the present embodiment, such as "computers such as personal computers (PCs) and servers", "tablet devices", "game machines", and "cameras such as digital still cameras and digital video cameras". Moreover, the present embodiment may be applied to a processing IC which can be embedded in above-mentioned appliances, for example.

Furthermore, the information processing apparatus according to the present embodiment may be applied to a processing system which is based on premise of connection to a network (or communication between devices), such as cloud computing, for example. As an example of a processing system which performs the processing by the information processing method according to the present embodiment, a "system in which one device forming the processing system performs a part of the processing by the information processing method according to the present embodiment, and another device forming the processing system performs processing other than the part of the processing among the processing by the information processing method according to the present embodiment" may be cited, for example.

Moreover, a description is given citing the capturing apparatus as a structural element of the information processing system according to the present embodiment, but the present embodiment is not limited to such a mode. With respect to the present embodiment, any devices including a capturing function, such as "cameras such as digital still cameras and digital video cameras", "communication devices which are capable of performing capturing, such as smartphones and mobile phones", "tablet devices which are capable of performing capturing", and "game machines which are capable of performing capturing" may be cited. Moreover, as described above, in the information processing system according to the present embodiment, the information processing apparatus according to the present embodiment may serve as the capturing apparatus.

### (Program according to Present Embodiment)

Arrangement of the capturing apparatus may be aided by execution, by a processor or the like in a computer system, of a program for causing a computer system to function as the information processing apparatus according to the present embodiment (such as a program enabling execution of the processing by the information processing method according to the present embodiment). Here, a single computer or a plurality of computers may be cited as the computer system according to the present embodiment. A series of processes by the information processing method according to the present embodiment is performed by the computer system according to the present embodiment.

Furthermore, the effects to be achieved by the processing by the information processing method according to the present embodiment described above may be achieved by execution, by a processor or the like in a computer system, of the program for causing a computer system to function as the information processing apparatus according to the present embodiment.

While the preferred embodiment of the present disclosure has been described above in detail with reference to the appended drawings, a technical scope of the present disclosure is not limited to such an example. A person skilled in the art to which the present disclosure pertains may find various alterations and modifications within the scope of technical ideas described in the appended claims, and it should be understood that they naturally fall within the technical scope of the present disclosure.

For example, providing a program (computer program) for causing a computer system to function as the information processing apparatus according to the present embodiment is described above, but the present embodiment may further provide a recording medium storing the program.

The configuration described above is an example of the present embodiment, and it naturally falls within the technical scope of the present embodiment.

## Claims

1. An information processing apparatus (100) comprising a processing unit (110) configured to issue a notification regarding a relationship between a predetermined area to be captured by a capturing apparatus (200) and the capturing apparatus, on a basis of predetermined area information specifying the predetermined area and information regarding the capturing apparatus that is arranged,
wherein the processing unit is configured to issue, as the notification regarding the relationship, a notification for aiding in changing an arrangement of the capturing apparatus,
wherein the processing unit is configured to issue, as the notification for aiding in changing the arrangement of the capturing apparatus, a notification for changing the arrangement of the capturing apparatus such that the predetermined area is included in a capturing range of the capturing apparatus,
wherein the predetermined area that is specified by the predetermined area information includes an area according to a type of sport.

2. The information processing apparatus according to claim 1, wherein the processing unit is configured to issue, as the notification regarding the relationship, a notification regarding a state of the capturing apparatus with respect to the predetermined area.

3. The information processing apparatus according to claim 2, wherein the processing unit is configured to issue, as the notification regarding the state of the capturing apparatus with respect to the predetermined area, a notification regarding a capturing range of the capturing apparatus with respect to the predetermined area.

4. The information processing apparatus according to claim 2, wherein the processing unit is configured to issue, as the notification regarding the state of the capturing apparatus with respect to the predetermined area, a notification regarding an arrangement of the capturing apparatus with respect to the predetermined area.

5. The information processing apparatus according to claim 1, wherein the processing unit further issues a notification for changing an arrangement of the capturing apparatus such that an overlapping area of capturing ranges of a plurality of the capturing apparatuses in the predetermined area is increased.

6. The information processing apparatus according to claim 1, wherein the processing unit is configured to issue, as the notification for aiding in changing an arrangement of the capturing apparatus, a notification for changing one or two or more among an angle of view, an orientation, and a position of the capturing apparatus.

7. The information processing apparatus according to claim 1, wherein the processing unit is configured to issue the notification regarding a relationship with the capturing apparatus on a basis of the area specified by the predetermined area information that is set from among a plurality of pieces of the predetermined area information.

8. The information processing apparatus according to claim 6, wherein the processing unit is configured to set the predetermined area information corresponding to a predetermined setting operation that is detected.

9. An information processing method to be performed by an information processing apparatus, the method comprising the step of issuing a notification regarding a relationship between a predetermined area to be captured by a capturing apparatus and the capturing apparatus, on a basis of predetermined area information specifying the predetermined area and information regarding the capturing apparatus that is arranged,
wherein, in the step of issuing the notification, a notification for aiding in changing an arrangement of the capturing apparatus is issued as the notification regarding a relationship,
wherein, in the step of issuing the notification, a notification for changing the arrangement of the capturing apparatus such that the predetermined area is included in a capturing range of the capturing apparatus is issued as the notification for aiding in changing the arrangement of the capturing apparatus,
wherein the predetermined area that is specified by the predetermined area information includes an area according to a type of sport.

10. The information processing method according to claim 9, wherein, in the step of issuing a notification, a notification regarding a state of the capturing apparatus with respect to the area is issued as the notification regarding a relationship.

11. The information processing method according to claim 9, wherein
the predetermined area information specifies a plurality of areas, and
in the step of issuing a notification, the notification regarding a relationship with the capturing apparatus is issued on a basis of the area that is set from among the plurality of areas.

## Patentansprüche

1. Informationsverarbeitungseinrichtung (100), die eine Verarbeitungseinheit (110) umfasst, die dazu konfiguriert ist, eine Benachrichtigung über eine Beziehung zwischen einem vorbestimmten Bereich, der von einer Aufnahmeeinrichtung (200) aufgenommen werden soll, und der Aufnahmeeinrichtung auszugeben, und zwar auf der Grundlage von vorbestimmten Bereichsinformationen, die den vorbestimmten Bereich spezifizieren, und Informationen über die Aufnahmeeinrichtung, die angeordnet ist,
wobei die Verarbeitungseinheit dazu konfiguriert ist, als Benachrichtigung bezüglich der Beziehung eine Benachrichtigung zur Unterstützung bei der Änderung einer Anordnung der Aufnahmeeinrichtung auszugeben,
wobei die Verarbeitungseinheit dazu konfiguriert ist, als Benachrichtigung zur Unterstützung bei der Änderung der Anordnung der Aufnahmevorrichtung eine Benachrichtigung zur Änderung der Anordnung der Aufnahmeeinrichtung auszugeben, so dass der vorbestimmte Bereich in einem Aufnahmebereich der Aufnahmeeinrichtung enthalten ist,
wobei der durch die vorbestimmte Bereichsinformationen angegebene vorbestimmte Bereich einen Bereich entsprechend einer Sportart einschließt.

2. Informationsverarbeitungseinrichtung nach Anspruch 1, wobei die Verarbeitungseinheit so konfiguriert ist, dass sie als Benachrichtigung bezüglich der Beziehung eine Benachrichtigung bezüglich eines Zustands der Aufnahmeeinrichtung in Bezug auf den vorbestimmten Bereich ausgibt.

3. Informationsverarbeitungseinrichtung nach Anspruch 2, wobei die Verarbeitungseinheit so konfiguriert ist, dass sie als Benachrichtigung über den Zustand der Aufnahmeeinrichtung in Bezug auf den vorbestimmten Bereich eine Benachrichtigung über einen Aufnahmebereich der Aufnahmeeinrichtung in Bezug auf den vorbestimmten Bereich ausgibt.

4. Informationsverarbeitungseinrichtung nach Anspruch 2, wobei die Verarbeitungseinheit so konfiguriert ist, dass sie als Benachrichtigung über den Zustand der Aufnahmeeinrichtung in Bezug auf den vorbestimmten Bereich eine Benachrichtigung über eine Anordnung der Aufnahmeeinrichtung in Bezug auf den vorbestimmten Bereich ausgibt.

5. Informationsverarbeitungseinrichtung nach Anspruch 1, wobei die Verarbeitungseinheit ferner eine Benachrichtigung zum Ändern einer Anordnung der Aufnahmeeinrichtungen ausgibt, so dass ein Überlappungsbereich von Aufnahmebereichen einer Vielzahl der Aufnahmeeinrichtungen in dem vorbestimmten Bereich vergrößert wird.

6. Informationsverarbeitungseinrichtung nach Anspruch 1, wobei die Verarbeitungseinheit so konfiguriert ist, dass sie als Benachrichtigung zur Unterstützung bei der Änderung einer Anordnung der Aufnahmeeinrichtung eine Benachrichtigung zur Änderung eines oder zweier oder mehr der folgenden Punkte ausgibt: Blickwinkel, Orientierung und Position der Aufnahmeeinrichtung.

7. Informationsverarbeitungseinrichtung nach Anspruch 1, wobei die Verarbeitungseinheit dazu konfiguriert ist, die Benachrichtigung hinsichtlich einer Beziehung mit der Aufnahmeeinrichtung auf Grundlage des durch die vorbestimmten Bereichsinformationen angegebenen Bereichs auszugeben, der aus einer Vielzahl von Teilen der vorbestimmten Bereichsinformationen eingestellt wird.

8. Informationsverarbeitungseinrichtung nach Anspruch 6, wobei die Verarbeitungseinheit dazu konfiguriert ist, die vorbestimmten Bereichsinformationen entsprechend einem erkannten vorbestimmten Einstellungsvorgang einzustellen.

9. Informationsverarbeitungsverfahren, das von einer Informationsverarbeitungseinrichtung ausgeführt wird, wobei das Verfahren den Schritt des Ausgebens einer Benachrichtigung über eine Beziehung zwischen einem von einer Aufnahmeeinrichtung zu erkennenden vorbestimmten Bereich und der Aufnahmeeinrichtung auf der Grundlage vorbestimmter Bereichsinformationen, die den vorbestimmten Bereich spezifizieren, und Informationen über die angeordnete Aufnahmeeinrichtung umfasst,
wobei im Schritt des Ausgebens der Benachrichtigung eine Benachrichtigung zur Unterstützung bei Änderung einer Anordnung der Erkennungseinrichtung als Benachrichtigung bezüglich einer Beziehung ausgegeben wird,
wobei im Schritt des Ausgebens der Benachrichtigung eine Benachrichtigung zum Ändern der Anordnung der Aufnahmeeinrichtung, so dass der vorbestimmte Bereich in einem Aufnahmebereich der Aufnahmeeinrichtung enthalten ist, als Benachrichtigung zur Unterstützung beim Ändern der Anordnung der Aufnahmeeinrichtung ausgegeben wird,
wobei der durch die vorbestimmte Bereichsinformationen angegebene vorbestimmte Bereich einen Bereich entsprechend einer Sportart einschließt.

10. Informationsverarbeitungsverfahren nach Anspruch 9, wobei im Schritt des Ausgebens einer Benachrichtigung eine Benachrichtigung bezüglich eines Zustands der Aufnahmeeinrichtung in Bezug auf den Bereich als Benachrichtigung bezüglich einer Beziehung ausgegeben wird.

11. Informationsverarbeitungsverfahren nach Anspruch 9, wobei die vorbestimmten Bereichsinformationen eine Vielzahl von Bereichen angeben und im Schritt des Ausgebens einer Benachrichtigung die Benachrichtigung bezüglich einer Beziehung mit der Aufnahmeeinrichtung auf der Grundlage des Bereichs ausgegeben wird, der aus der Vielzahl von Bereichen eingestellt wird.

## Revendications

1. Appareil de traitement d'informations (100) comprenant une unité de traitement (110) configurée pour délivrer une notification concernant une relation entre une zone prédéterminée à capturer par un appareil de capture (200) et l'appareil de capture, en fonction d'informations de zone prédéterminée spécifiant la zone prédéterminée et d'informations concernant l'appareil de capture qui est agencé,
dans lequel l'unité de traitement est configurée pour délivrer, en guise de notification concernant la relation, une notification pour aider à changer un agencement de l'appareil de capture,
dans lequel l'unité de traitement est configurée pour délivrer, en guise de notification pour aider à changer l'agencement de l'appareil de capture, une notification pour changer l'agencement de l'appareil de capture de telle sorte que la zone prédéterminée est incluse dans une plage de capture de l'appareil de capture,
dans lequel la zone prédéterminée qui est spécifiée par les informations de zone prédéterminée comporte une zone selon un type de sport.

2. Appareil de traitement d'informations selon la revendication 1, dans lequel l'unité de traitement est configurée pour délivrer, en guise de notification concernant la relation, une notification concernant un état de l'appareil de capture par rapport à la zone prédéterminée.

3. Appareil de traitement d'informations selon la revendication 2, dans lequel l'unité de traitement est configurée pour délivrer, en guise de notification concernant l'état de l'appareil de capture par rapport à la zone prédéterminée, une notification concernant une plage de capture de l'appareil de capture par rapport à la zone prédéterminée.

4. Appareil de traitement d'informations selon la revendication 2, dans lequel l'unité de traitement est configurée pour délivrer, en guise de notification concernant l'état de l'appareil de capture par rapport à la zone prédéterminée, une notification concernant un agencement de l'appareil de capture par rapport à la zone prédéterminée.

5. Appareil de traitement d'informations selon la revendication 1, dans lequel l'unité de traitement délivre en outre une notification pour changer un agencement de l'appareil de capture de telle sorte qu'une zone de chevauchement de plages de capture d'une pluralité des appareils de capture dans la zone prédéterminée est augmentée.

6. Appareil de traitement d'informations selon la revendication 1, dans lequel l'unité de traitement est configurée pour délivrer, en guise de notification pour aider à changer un agencement de l'appareil de capture, une notification pour changer un ou deux ou plus parmi un angle de vue, une orientation et une position de l'appareil de capture.

7. Appareil de traitement d'informations selon la revendication 1, dans lequel l'unité de traitement est configurée pour délivrer la notification concernant une relation avec l'appareil de capture en fonction de la zone spécifiée par les informations de zone prédéterminée qui sont réglées parmi une pluralité d'éléments des informations de zone prédéterminée.

8. Appareil de traitement d'informations selon la revendication 6, dans lequel l'unité de traitement est configurée pour régler les informations de zone prédéterminée correspondant à une opération de réglage prédéterminée qui est détectée.

9. Procédé de traitement d'informations à effectuer par un appareil de traitement d'informations, le procédé comprenant l'étape consistant à délivrer une notification concernant une relation entre une zone prédéterminée à capturer par un appareil de capture et l'appareil de capture, en fonction d'informations de zone prédéterminée spécifiant la zone prédéterminée et d'informations concernant l'appareil de capture qui est agencé,
dans lequel, dans l'étape consistant à délivrer la notification, une notification pour aider à changer un agencement de l'appareil de capture est délivrée en guise de notification concernant une relation,
dans lequel, dans l'étape consistant à délivrer la notification, une notification pour changer l'agencement de l'appareil de capture de telle sorte que la zone prédéterminée est incluse dans une plage de capture de l'appareil de capture est délivrée en guise de notification pour aider à changer l'agencement de l'appareil de capture,
dans lequel la zone prédéterminée qui est spécifiée par les informations de zone prédéterminée comporte une zone selon un type de sport.

10. Procédé de traitement d'informations selon la revendication 9, dans lequel, dans l'étape consistant à délivrer une notification, une notification concernant un état de l'appareil de capture par rapport à la zone est délivrée en guise de notification concernant une relation.

11. Procédé de traitement d'informations selon la revendication 9, dans lequel les informations de zone prédéterminée spécifient une pluralité de zones, et
dans l'étape consistant à délivrer une notification, la notification concernant une relation avec l'appareil de capture est délivrée en fonction de la zone qui est réglée parmi la pluralité de zones.
